# EUROPÄISCHE PATENTSCHRIFT

(11) **EP 4 169 738 B1**
(45) Veröffentlichungstag und Bekanntmachung des Hinweises auf die Patenterteilung: **16.04.2025**
(21) Anmeldenummer: 22200781.7
(22) Anmeldetag: 11.10.2022
(51) Int. Cl.: B60C 1/00, B60C 11/00, B60C 19/08

(54) **LAUFSTREIFENKONSTRUKTION**
TIRE TREAD CONSTRUCTION
STRUCTURE DE BANDE DE ROULEMENT

(30) Priorität: 25.10.2021 DE 102021211996
(43) Veröffentlichungstag der Anmeldung: 26.04.2023
(73) Patentinhaber: Continental Reifen Deutschland GmbH, 30175 Hannover (DE)
(72) Erfinder: Sharifi, Monir, 30165 Hannover (DE); Lies, Alexander, 30165 Hannover (DE)
(74) Vertreter: Continental Corporation

(56) Entgegenhaltungen:
- US-A- 6 070 630
- US-A1- 2002 185 210
- US-A1- 2014 367 008
- US-B2- 9 586 447

## Beschreibung

Die Erfindung betrifft einen Laufstreifen für den Einsatz in Fahrzeugreifen und einen Fahrzeugreifen umfassend einen entsprechenden Laufstreifen. Offenbart werden zudem Verfahren zur Herstellung entsprechender Laufstreifen und Fahrzeugreifen sowie eine Verwendung solcher Laufstreifen zur Verringerung der elektrostatischen Aufladung im Betrieb von Fahrzeugreifen. Der Gegenstand der Erfindung ist in den beigefügten Ansprüchen definiert.

Eine wesentliche Komponente moderner Fahrzeugluftreifen, die in vielen Fällen maßgeblich für die Leistungscharakteristika dieser Produkte verantwortlich ist, ist der Laufstreifen. Heutzutage bestehen Laufstreifen dabei zumeist aus mehreren verschiedenen Komponenten, insbesondere verschiedenen Gummiwerkstoffen, welche durch Vulkanisation aus vulkanisierbaren Kautschukmischungen erhalten werden können. Entsprechende Laufstreifen werden zumeist durch sogenannte Coextrusion verschiedener vulkanisierbarer Kautschukmischungen hergestellt und in ihrem Aufbau regelmäßig über ihren Querschnitt beschrieben, der sich, abgesehen etwaiger komplexer Profilierungen der Oberfläche, zumeist gleichmäßig durch den gesamten Laufstreifenstrang zieht, welcher den Fahrzeugluftreifen umfasst. Entsprechend wird in diesem Zusammenhang häufig auch von sogenannten Laufstreifenprofilen gesprochen.

In der Querschnittsansicht umfassen die meisten Laufstreifen, insbesondere im PKW- und LKW-Bereich, einen oder mehrere Gummiwerkstoffe, die im späteren Einsatz Kontakt mit der Fahrbahn haben sollen und hinsichtlich ihrer Eigenschaften für diesen Zweck optimiert werden. Diese quasi als Decklage fungierende Schicht wird dabei aus einer vulkanisierbaren Kautschukmischung hergestellt, die zuweilen auch als "Cap-Mischung" bezeichnet wird.

Unterhalb des für den Fahrbahnkontakt vorgesehenen Gummiwerkstoffs befindet sich regelmäßig eine Grundlage (häufig auch als sogenannte "Base" bezeichnet). Diese Grundlage dient in der überwiegenden Zahl der Fälle vor allem dafür, eine hinreichende Klebrigkeit zwischen der für den Fahrbahnkontakt vorgesehenen Decklage und den übrigen Teilen des Fahrzeugluftreifens herzustellen, sodass eine hohe Verbundfestigkeit zwischen dem Laufstreifen und den übrigen Bestandteilen des Fahrzeugluftreifens sichergestellt werden kann. Dies ist regelmäßig notwendig, da die für den Fahrbahnkontakt vorgesehenen Decklagen in vielen Fällen keine ausreichende Klebrigkeit aufweisen und die bei unmittelbarer Anbringung an den übrigen Komponenten eines Fahrzeugluftreifens entstehende Verbundfestigkeit in vielen Fällen unzureichend wäre.

Dem Fachmann ist bewusst, dass ein Laufstreifen für die überwiegende Zahl von Anwendungen in seiner Gesamtheit eine gewisse Leitfähigkeit aufweisen muss. In vielen Fällen verfügt jedoch der Gummiwerkstoff der Decklage nicht über eine hinreichende elektrische Leitfähigkeit. In diesen Fällen wird die elektrische Leitfähigkeit des gesamten Laufstreifens regelmäßig durch eine Base-Mischung der Grundlage realisiert, die eine gesteigerte elektrische Leitfähigkeit aufweist. Hierzu wird beispielsweise ein Materialstrang aus der Grundlage bis zur Oberseite des Laufstreifens geführt, welcher dadurch eine elektrisch leitfähige Verbindung zwischen der Oberfläche des Laufstreifens und der Grundlage herstellt. Eine entsprechende Ausgestaltung wird dabei auch als "center carbon beam" (CCB) bezeichnet.

In den Fahrzeugluftreifen des Standes der Technik kommt der Grundlage somit regelmäßig eine wichtige Bedeutung zu. Tatsächlich ist es in einigen Fällen sogar möglich, durch eine spezifische Ausgestaltung der in der Grundlage verwendeten Gummiwerkstoffe, insbesondere durch eine spezifische Abstimmung auf die in der Decklage eingesetzten Gummiwerkstoffe, die Leistungsfähigkeit der Fahrzeugluftreifen in spezifischen Leistungsbereichen zu erhöhen. Für zahlreiche Anwendungen verursacht die Grundlage und der in ihr eingesetzte Gummiwerkstoff jedoch eher eine Verschlechterung der Leistungseigenschaften, sodass ein Zielkonflikt zwischen der Notwendigkeit der Grundlage für eine hinreichende Klebrigkeit bzw. ausreichende elektrische Leitfähigkeit und einer an sich unvorteilhaften Beeinflussung der Fahreigenschaften des Fahrzeugluftreifens gegenübersteht. In vielen Fällen bedeutet dieser Zielkonflikt für den Fachmann, dass bei herkömmlichen Grundlagen und üblichen Laufstreifenprofilen die Leistungseigenschaften zumeist umso schlechter sind, je größer der Anteil der Grundlage am Laufstreifenprofil, d.h. der Flächenanteil der Grundlage im Querschnitt durch den Laufstreifen, ist.

Die US 2014367008 A1 offenbart einen Luftreifen, der eine in einer Fahrzeugkarosserie oder dem Reifen erzeugte statische Elektrizität an eine Straßenoberfläche ableiten kann. Die US 2002185210 A1 offenbart ein Verfahren zur Verbesserung der Haftung einer Reifendecke auf trockenem Boden und insbesondere die Verwendung einer besonderen Laufflächenstruktur, die eine Verbesserung dieser Haftung ermöglicht. Die US 2014283964 A1 offenbart einen antistatischen Fahrzeugreifen und ein Verfahren zur Herstellung eines solchen Reifens. Die US 6070630 A offenbart einen Gummireifen mit einer mit Ruß verstärkten Karkasse und einer spezifischen Gummilaufflächenkonstruktion.

Es war die Aufgabe der vorliegenden Erfindung, die aus dem Stand der Technik bekannten Nachteile auszuräumen oder zumindest zu vermindern.

Insbesondere war es die Aufgabe der vorliegenden Erfindung, einen Laufstreifen für den Einsatz in Fahrzeugreifen anzugeben, welcher auch bei Einsatz von schlecht leitfähigen Gummiwerkstoffen in der Decklage eine ausreichende elektrische Leitfähigkeit des gesamten Laufstreifens gewährleistet.

Hierbei war es eine Aufgabe, dass der Anteil der Grundlage am Laufstreifen idealerweise reduziert werden sollte, wobei der in der Grundlage eingesetzte Gummiwerkstoff vorteilhafterweise auch nicht an der für den Fahrbahnkontakt vorgesehenen Oberseite des Laufstreifens vorliegen sollte, insbesondere nicht in Form eines aus der Grundlage gebildeten CCB.

Es war eine Aufgabe der vorliegenden Erfindung, dass die Fertigung der anzugebenden Laufstreifen besonders leicht, d. h. besonders zeit- und kosteneffizient, durchführbar sein sollte, insbesondere im
Vergleich zu solchen Laufstreifenprofilen, die einen aus der Grundlage herausragenden und bis zur Oberfläche des Laufstreifens reichenden CCB aufweisen.

Es war eine Aufgabe der vorliegenden Erfindung, durch die Verringerung des Anteils der Grundlage und die Abwesenheit eines CCB, die Leistungseigenschaften von Fahrzeugreifen, welche einen entsprechenden Laufstreifen umfassen, zu verbessern.

Insoweit war es eine Aufgabe der vorliegenden Erfindung, dass die anzugebenden Laufstreifen in der Herstellung wünschenswerterweise nur geringfügige Änderungen an den bereits vorhandenen Vorrichtungen erfordern sollten. Entsprechend war es eine ergänzende Aufgabe der vorliegenden Erfindung, ein Verfahren zur Herstellung entsprechender Laufstreifen sowie ein darauf aufbauendes Verfahren zur Herstellung von Fahrzeugreifen anzugeben.

Die vorstehend genannten Aufgaben werden durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Verfahren und Verwendungen ergeben sich aus den Merkmalen bevorzugter Laufstreifen und Fahrzeugreifen.

Die Erfindung betrifft einen Laufstreifen für den Einsatz in Fahrzeugreifen, mit einer für den Fahrbahnkontakt vorgesehenen Oberseite und einer für die Verbindung mit weiteren Bauteilen eines Fahrzeugreifens vorgesehenen Unterseite, umfassend:
a) ein Zentralelement umfassend:
   i) eine Grundlage umfassend einen ersten Gummiwerkstoff,
      wobei eine Oberfläche der Grundlage an der Unterseite des Laufstreifens angeordnet ist,
   ii) eine mit der Grundlage verbundene Decklage umfassend einen zweiten Gummiwerkstoff, wobei eine Oberfläche der Decklage an der Oberseite des Laufstreifens angeordnet ist, und
b) ein erstes Flankenelement umfassend einen dritten Gummiwerkstoff und ein zweites Flankenelement umfassend einen vierten Gummiwerkstoff,

wobei das erste Flankenelement und das zweite Flankenelement auf gegenüberliegenden Seiten des Zentralelements angeordnet sind, und wobei der dritte Gummiwerkstoff und der vierte Gummiwerkstoff bei 25 °C einen spezifischen Widerstand von 10¹⁰ Ω m oder weniger aufweisen, dadurch gekennzeichnet, dass sich der dritte Gummiwerkstoff und der vierte Gummiwerkstoff an den Seiten des Zentralelements von der Unterseite des Laufstreifens zur Oberseite des Laufstreifens erstrecken, wobei das Zentralelement aus der Grundlage und der Decklage besteht, wobei der Massenanteil des dritten Gummiwerkstoffs im ersten Flankenelement 90 % oder mehr beträgt, bezogen auf die Masse des ersten Flankenelements, und wobei der Massenanteil des vierten Gummiwerkstoffs im zweiten Flankenelement 90 % oder mehr beträgt, bezogen auf die Masse des zweiten Flankenelements, oder
wobei das erste Flankenelement und das zweite Flankenelement zumindest einen fünften Gummiwerkstoff umfassen, wobei der fünfte Gummiwerkstoff auf der vom Zentralelement abgewandten Seite des Flankenelements angeordnet ist.

Die erfindungsgemäßen Laufstreifen sind für den Einsatz in Fahrzeugreifen, insbesondere Fahrzeugluftreifen, geeignet. In Übereinstimmung mit dem fachmännischen Verständnis verfügt ein Laufstreifen über eine Oberseite, die später für den Kontakt mit der Fahrbahn vorgesehen ist, sowie eine Unterseite, über welche die Verbindung zu den restlichen Bestandteilen des Fahrzeugluftreifens hergestellt wird.

In dem erfindungsgemäßen Laufstreifen gibt es ein Zentralelement, welches aus einer Grundlage und einer mit der Grundlage verbundene Decklage ausgebildet ist. Die Decklage ist dabei für den Kontakt mit der Fahrbahn vorgesehen, wohingegen die Grundlage im Herstellungsverfahren, d.h. zumeist vor der Vulkanisation, die notwendige Klebrigkeit bereitstellt, um den Laufstreifen fest mit den übrigen Komponenten eines Fahrzeugluftreifens verbinden zu können. Das in dem erfindungsgemäßen Laufstreifen enthaltene Zentralelement kann somit selbst als ein typischer Laufstreifen aus Grundlage und Decklage angesehen werden, wie er aus dem Stand der Technik bekannt ist.

Die erfindungsgemäßen Laufstreifen umfassen nunmehr jedoch ein erstes und ein zweites Flankenelement, die selbst jeweils einen Gummiwerkstoff umfassen. Diese sind auf gegenüberliegenden Seiten des Zentralelements angeordnet und rahmen dieses sozusagen ein, was vorteilhafterweise regelmäßig besonders leicht konstruktiv umzusetzen ist, insbesondere im Vergleich mit einer Konstruktion, die einen zentralen CCB aufweist. Die in den Flankenelementen enthaltenen Gummiwerkstoffe erstrecken sich dabei erfindungsgemäß von der Unterseite des Laufstreifens zur Oberseite des Laufstreifens und ermöglichen es, durch ihren vergleichsweise niedrigen spezifischen Widerstand von 10¹⁰ Ω m oder weniger, d.h. in Worten Zehn hoch Zehn, eine hinreichende elektrische Gesamtleitfähigkeit des gesamten Laufstreifens, da eine ungewollte elektrostatische Aufladung durch die Flankenelemente effizient vermieden werden kann.

Mit entsprechenden erfindungsgemäßen Laufstreifen können besonders leistungsfähige Fahrzeugreifen, die über ausgezeichnete Leitfähigkeitseigenschaften, in zeit- und kosteneffizienter Weise hergestellt werden. Zudem ist es dadurch, dass die hinreichende elektrische Gesamtleitfähigkeit durch die Flankenelemente gewährleistet werden kann möglich, den Anteil der Grundlage und des darin enthaltenen ersten Gummiwerkstoffs im Laufstreifen vorteilhafterweise zu reduzieren.

Im Rahmen der vorliegenden Erfindung bezeichnet der spezifische Widerstand den spezifischen elektrischen Durchgangswiderstand von Materialien, bei dem es sich um eine dem Fachmann geläufige Größe zur Charakterisierung von Werkstoffen handelt. Die Messung des spezifischen elektrischen Durchgangswiderstands bei Gummiwerkstoffen erfolgt in Übereinstimmung mit der üblichen Praxis entweder gemäß der DIN EN ISO 3915 aus 1999, die insbesondere für besonders leitfähige Materialien zum Einsatz kommt, bzw. gemäß der IEC 60093 aus 1993, die bei hohen spezifischen elektrischen Durchgangswiderständen eingesetzt wird. Auch wenn für die überwiegende Zahl von Gummiwerkstoffen die IEC 60093 aus 1993 einschlägig sein wird, richtet sich die Wahl der Norm nach den Vorgaben der beiden Vorschriften sowie den Eigenschaften des jeweiligen untersuchten Materials.

Auch wenn es prinzipiell möglich wäre, dass das Zentralelement weitere Bestandteile umfasst, ist es erfindungsgemäß, wenn das Zentralelement nur aus den angegebenen Bestandteilen besteht. Entsprechend ist es auch bevorzugt, wenn die Grund- und Decklage zumindest überwiegend, bevorzugt im Wesentlichen vollständig, aus den jeweiligen Gummiwerkstoffen bestehen. Erfindungsgemäß ist demnach ein Laufstreifen, wobei das Zentralelement aus der Grundlage und der Decklage besteht.

Bevorzugt ist ebenfalls ein erfindungsgemäßer Laufstreifen, wobei der Massenanteil des ersten Gummiwerkstoffs in der Grundlage 90 % oder mehr, bevorzugt 95 % oder mehr, besonders bevorzugt 99 % oder mehr, ganz besonders bevorzugt 99,5 % oder mehr, beträgt, bezogen auf die Masse der Grundlage, und/oder wobei der Massenanteil des zweiten Gummiwerkstoffs in der Decklage 90 % oder mehr, bevorzugt 95 % oder mehr, besonders bevorzugt 99 % oder mehr, ganz besonders bevorzugt 99,5 % oder mehr, beträgt, bezogen auf die Masse der Decklage.

Der Fachmann versteht, dass die erfindungsgemäßen Laufstreifen vorteilhafterweise mit einer lediglich dünnen Grundlage ausgeführt werden können, da diese nicht die elektrischen Eigenschaften des Laufstreifens bedingen muss. Entsprechend ist es besonders vorteilhaft, wenn die Grundlage auch entsprechend dünn ausgebildet wird. Bevorzugt ist somit ein erfindungsgemäßer Laufstreifen, wobei das Volumen der Grundlage kleiner ist als das Volumen der Decklage. Bevorzugt ist auch ein erfindungsgemäßer Laufstreifen, wobei das Volumen des ersten Flankenbereichs und/oder des zweiten Flankenbereichs größer ist als das Volumen der Grundlage.

Auch wenn es potentiell denkbar ist, die Flankenbereiche unterschiedlich auszuführen, ist es aus fertigungstechnischer Hinsicht und mit Blick auf möglichst gleichbleibende Fahreigenschaften bevorzugt, wenn die Flankenbereiche im Wesentlichen gleich ausgeführt werden. Bevorzugt ist somit ein erfindungsgemäßer Laufstreifen, wobei das Volumen des ersten Flankenbereichs und des zweiten Flankenbereichs im Wesentlichen gleich groß ist. Bevorzugt ist entsprechend auch ein erfindungsgemäßer Laufstreifen, wobei der dritte Gummiwerkstoff und der vierte Gummiwerkstoff identisch sind.

Da die Flankenbereiche in den erfindungsgemäßen Laufstreifen vor allem der Gewährleistung einer hinreichenden elektrischen Leitfähigkeit dienen, hinsichtlich der Optimierung der Fahreigenschaften jedoch in vielen Fällen hinter dem zweiten Gummiwerkstoff zurückbleiben werden, ist es bevorzugt, die Flankenbereiche vergleichsweise klein auszuführen. Bevorzugt ist deshalb ein erfindungsgemäßer Laufstreifen, wobei das kombinierte Volumen des ersten Flankenbereichs und des zweiten Flankenbereichs kleiner ist als das Volumen des Zentralbereichs.

Für die erfindungsgemäßen Laufstreifen gelten hinsichtlich der übrigen konstruktiven Ausgestaltungen ähnliche Grundsätze wie bei Laufstreifen aus dem Stand der Technik. Regelmäßig praxisrelevant ist somit ein erfindungsgemäßer Laufstreifen, wobei der Laufstreifen an der Oberseite ein Profil aufweist.

Regelmäßig praxisrelevant ist ebenfalls ein erfindungsgemäßer Laufstreifen, wobei der Laufstreifen strangförmig ist, wobei die Länge des Laufstreifens größer ist als die Breite des Laufstreifens, wobei bevorzugt die Grundlage und/oder die Decklage und/oder der erste Flankenbereich und/oder der zweite Flankenbereich, bevorzugt beide Lagen und beide Flankenbereiche, strangförmig sind.

Bevorzugt ist ein erfindungsgemäßer Laufstreifen, wobei der Laufstreifen eine Dicke im Bereich von 10 bis 60 mm, bevorzugt im Bereich von 20 bis 30 mm, aufweist.

Der Erfinder hat erkannt, dass die vorteilhaften Eigenschaften der erfindungsgemäßen Laufstreifen weiter verbessert werden können, wenn die in den Flankenelementen eingesetzten Gummiwerkstoffe besonders leitfähig ausgebildet werden. Hierdurch lässt sich die statische Aufladung der Laufstreifen bzw. der Fahrzeugreifen im Betrieb zuverlässig verhindern und es ist vorteilhafterweise möglich, die Flankenelemente besonders klein und materialsparend ausformen zu können. Bevorzugt ist daher ein erfindungsgemäßer Laufstreifen, wobei der dritte Gummiwerkstoff und der vierte Gummiwerkstoff bei 25 °C einen spezifischen Widerstand von 10⁹ Ω m oder weniger, bevorzugt von 10⁸ Ω m oder weniger, besonders bevorzugt von 10⁷ Ω m oder weniger, aufweisen.

Für den Fachmann versteht sich, dass sich die Vorteile des erfindungsgemäßen Verfahrens besonders dann zeigen, wenn die für den Fahrbahnkontakt vorgesehene Decklage selbst über einen relativ hohen spezifischen Widerstand verfügt. Bevorzugt ist somit ein erfindungsgemäßer Laufstreifen, wobei der zweite Gummiwerkstoff bei 25 °C einen spezifischen Widerstand von mehr als 10¹⁰ Ω m, bevorzugt von mehr als 10¹¹ Ω m, besonders bevorzugt mehr als 10¹² Ω m, aufweist.

Es kann als Vorteil der erfindungsgemäßen Laufstreifen gesehen werden, dass diese abgesehen von den definierten spezifischen Widerständen hinsichtlich der Auswahl der Gummiwerkstoffe sehr flexibel sind, sodass vorteilhafterweise solche Materialien eingesetzt werden können, die im Bereich der Reifenfertigung traditionell üblich sind. Bevorzugt ist dabei ein erfindungsgemäßer Laufstreifen, wobei der erste Gummiwerkstoff und/oder der zweite Gummiwerkstoff und/oder der dritte Gummiwerkstoff, und/oder der vierte Gummiwerkstoff, bevorzugt sämtliche Gummiwerkstoffe, herstellbar sind durch Vulkanisation von vulkanisierbaren Kautschukmischungen, wobei die vulkanisierbaren Kautschukmischungen bevorzugt zumindest einen Dienkautschuk und zumindest einen Füllstoff umfassen.

Hierbei hat es sich als vorteilhaft erwiesen, für eine Optimierung der hinreichenden Haftvermittlung in den vulkanisierbaren Kautschukmischungen für die Grundlage Naturkautschuk sowie Klebharze einzusetzen. Bevorzugt ist daher ein erfindungsgemäßer Laufstreifen, wobei der erste Gummiwerkstoff herstellbar ist durch Vulkanisation einer vulkanisierbaren Kautschukmischung, die Naturkautschuk, bevorzugt in einem Gehalt von 20 phr oder mehr, besonders bevorzugt 30 phr oder mehr, und/oder ein oder mehrere Klebharze, bevorzugt in einem Gehalt von 2 phr oder mehr, umfasst.

Zum Erhalt von Gummiwerkstoffen, die sich besonders für den Einsatz in den Flankenelementen eignen, hat es sich als zielführend erwiesen, relativ große Mengen an Ruß als Zusatzstoff zur vulkanisierbaren Kautschukmischung vorzusehen. Bevorzugt ist nämlich ein erfindungsgemäßer Laufstreifen, wobei der dritte Gummiwerkstoff und/oder der vierte Gummiwerkstoff herstellbar sind durch Vulkanisation einer vulkanisierbaren Kautschukmischung, die Ruß, bevorzugt in einem Gehalt von 20 phr oder mehr, besonders bevorzugt 30 phr oder mehr, umfasst.

Bevorzugt ist ein erfindungsgemäßer Laufstreifen, wobei die Decklage mit der Grundlage und/oder dem ersten Flankenelement und/oder dem zweiten Flankenelement, bevorzugt mit der Grundlage und beiden Flankenelementen, im Kontaktbereich durch eine stoffschlüssige Verbindung verbunden ist, wobei die stoffschlüssige Verbindung bevorzugt durch einen Vulkanisationsprozess erzeugt oder befördert wurde.

Dem Erfinder ist es gelungen, besonders günstige Geometrien und Anordnungen für die Flankenbereiche zu identifizieren, die insbesondere für den Einsatz Fahrzeugluftreifen für Hochleistungsanwendungen besonders geeignet sind. In einer ersten Ausführungsform ist es dabei besonders vorteilhaft, wenn der Anteil der Oberseite des Laufstreifens, welcher von der Decklage ausgefüllt wird, maximiert wird. Ein trapezförmiger Aufbau der eingesetzten Elemente ermöglicht es dabei vorteilhafterweise, den Anteil der Grundlage besonders niedrig zu halten. Bevorzugt ist insoweit ein erfindungsgemäßer Laufstreifen, wobei das erste Flankenelement und/oder das zweite Flankenelement, bevorzugt beide Flankenelemente, einen trapezförmigen Querschnitt aufweisen, wobei die längere Grundseite des Trapezes bevorzugt an der Unterseite des Laufstreifens liegt. Bevorzugt ist zusätzlich oder alternativ ein erfindungsgemäßer Laufstreifen, wobei das Zentralelement einen trapezförmigen Querschnitt aufweist, wobei die längere Grundseite des Trapezes bevorzugt auf der Oberseite des Laufstreifens liegt.

Insbesondere mit Blick auf eine einfache Fertigung ist es besonders vorteilhaft, wenn auch die Flankenelemente im Wesentlichen aus den entsprechenden Gummiwerkstoffen bestehen und nicht noch weitere Materialien umfassen. Erfindungsgemäß ist deshalb in einer ersten Alternative ein Laufstreifen, wobei der Massenanteil des dritten Gummiwerkstoffs im ersten Flankenelement 90 % oder mehr, bevorzugt 95 % oder mehr, besonders bevorzugt 99 % oder mehr, ganz besonders bevorzugt 99,5 % oder mehr, beträgt, bezogen auf die Masse des ersten Flankenelements, und wobei der Massenanteil des vierten Gummiwerkstoffs im zweiten Flankenelement 90 % oder mehr, bevorzugt 95 % oder mehr, besonders bevorzugt 99 % oder mehr, ganz besonders bevorzugt 99,5 % oder mehr, beträgt, bezogen auf die Masse des zweiten Flankenelements.

Als erfindungsgemäße Alternative zu der vorstehend beschriebenen Ausführungsform können die Flankenelemente jedoch auch mehrteilig ausgebildet werden, wobei sich der dritte und vierte Gummiwerkstoff in diesem Fall natürlich trotzdem erfindungsgemäß von der Unterseite zur Oberseite des Laufstreifens erstrecken müssen, um die notwendige elektrische Leitfähigkeit des Laufstreifens sicherzustellen. Hierbei ist es jedoch vorteilhafterweise möglich, Teile der Flankenelemente auch durch andere Gummiwerkstoffe auszubilden, deren physikalisch-chemische Eigenschaften spezifisch ausgebildet und an die späteren Leistungsanforderungen des Fahrzeugluftreifens angepasst werden können, sodass beispielsweise die Laufeigenschaften des Laufstreifens nahe des Schulterbereichs des Fahrzeugluftreifens gezielt modifiziert werden können. Erfindungsgemäß ist in einer zweiten Alternative ein Laufstreifen, wobei das erste Flankenelement und das zweite Flankenelement zumindest einen fünften Gummiwerkstoff umfassen, wobei der fünfte Gummiwerkstoff bevorzugt auf der vom Zentralelement abgewandten Seite des Flankenelements angeordnet ist, und wobei der fünfte Gummiwerkstoff bevorzugt an der Oberseite des Laufstreifens liegt, wobei der fünfte Gummiwerkstoff besonders bevorzugt nicht an der Unterseite des Laufstreifens liegt, wobei der fünfte Gummiwerkstoff und der zweite Gummiwerkstoff ganz besonders bevorzugt identisch sind.

In einer bevorzugten Ausführungsform der vorstehend beschriebenen mehrteiligen Flankenelemente können diese so ausgeführt werden, dass die strangförmigen Flankenelemente im Querschnitt durch den Laufstreifen ein Winkelprofil aufweisen, beispielsweise indem sie L-förmig ausgebildet werden. Diese Winkelprofile können beispielsweise an ein im Wesentlichen rechteckiges Zentralelement angeschmiegt werden und bieten dadurch auf der vom Zentralelement abgewandten Seite eine Aufnahme für zusätzliche Gummiwerkstoffe, sodass der Flächenanteil der Oberseite des Laufstreifens für den dritten und vierten Gummiwerkstoff vergleichsweise niedrig gewählt werden kann. Bevorzugt ist ein erfindungsgemäßer Laufstreifen, wobei das erste Flankenelement und/oder das zweite Flankenelement im Querschnitt ein Winkelprofil, bevorzugt mit einem Winkel von 90° oder mehr, aufweisen, sodass der dritte Gummiwerkstoff und/oder der vierte Gummiwerkstoff an den Seiten des Zentralelements und an der Oberseite des Laufstreifens liegen, wobei der Anteil der Oberseite des Laufstreifens, der von dem dritten Gummiwerkstoff und/oder dem vierten Gummiwerkstoff gebildet wird, bevorzugt jeweils im Bereich von 5 bis 30 %, bevorzugt im Bereich von 10 bis 20 %, liegt.

Im Zuge der Entwicklung der vorliegenden Erfindung hat der Erfinder eine besonders bevorzugte Ausführungsform identifiziert. Überraschenderweise ist es nämlich möglich, in solchen Fällen, in denen die Grundlage nicht zur elektrischen Leitfähigkeit des Laufstreifens beitragen muss, diese nicht flächig, sondern hingegen lediglich aus einzelnen Teillagen auszubilden, die sich entsprechend als voneinander beabstandete Stränge an der Unterseite des Laufstreifens durch den Laufstreifen ziehen und somit eine in Teillagen untergliederte Grundlage bilden. Durch diese Vorgehensweise ist es vorteilhafterweise möglich, eine hinreichende Klebrigkeit an der Unterseite des unvulkanisierten Laufstreifens zu gewährleisten und gleichzeitig den Anteil des ersten Gummiwerkstoffs, d. h. des Gummiwerkstoffs der Grundlage, am Laufstreifen besonders stark zu reduzieren, wobei in synergistischer Weise die Kontaktfläche zwischen der aus Teillagen ausgebildeten Grundlage sowie der Decklage, bezogen auf die Masse der eingesetzten Grundlage, durch die erhöhte Gesamtoberfläche der aus Teillagen ausgebildeten Grundlage, besonders hoch ist und somit eine besonders günstige Verbundfestigkeit erreicht werden kann. Hierbei hat sich gezeigt, dass die Klebrigkeit des so erhaltenen Laufstreifens ausreichend ist, um diesen zuverlässig auf den übrigen Komponenten eines Fahrzeugluftreifens zu platzieren und mittels Vulkanisation zu befestigen. Besonders bevorzugt ist deshalb ein erfindungsgemäßer Laufstreifen, wobei die Grundlage zwei oder mehr, bevorzugt drei oder mehr, besonders bevorzugt vier oder mehr, separate und voneinander beabstandete, bevorzugt äquidistant beabstandete, Teillagen umfasst, wobei sämtliche der Teillagen mit der Decklage verbunden sind, wobei sämtliche der Teillagen mit einer Oberfläche an der Unterseite des Laufstreifens liegen.

Im Lichte der vorstehenden Ausführungen ist für den Fachmann verständlich, dass die Erfindung auch einen Fahrzeugreifen betrifft, der bedingt durch die vorteilhafte elektrische Leitfähigkeit des Laufstreifens und den niedrigen Anteil der Grundlage im Laufstreifen besonders vorteilhaft ist. Die Erfindung betrifft entsprechend auch einen Fahrzeugreifen, insbesondere Fahrzeugluftreifen, umfassend einen erfindungsgemäßen Laufstreifen als Laufstreifen.

Offenbart wird hierdurch auch die Verwendung eines erfindungsgemäßen Laufstreifens als Laufstreifen eines Fahrzeugreifens, insbesondere eines Fahrzeugluftreifens, zur Verringerung der elektrostatischen Aufladung im Betrieb.

Offenbart wird zudem ein Verfahren zur Herstellung eines erfindungsgemäßen Laufstreifens, umfassend die Schritte:
v1) Herstellen eines unvulkanisierten Laufstreifenrohlings durch Coextrusion einer ersten vulkanisierbaren Kautschukmischung, einer zweiten vulkanisierbaren Kautschukmischung, einer dritten vulkanisierbaren Kautschukmischung, und einer vierten vulkanisierbaren Kautschukmischung, und
v3) Vulkanisieren des unvulkanisierten Laufstreifenrohlings.
Hierbei kann das Vulkanisieren vorteilhafterweise unter den üblichen Bedingungen erfolgen, die dem Fachmann aus dem Stand der Technik umfassend bekannt sind und die er im Zweifelsfall zwangslos auf die Vulkanisationseigenschaften der in den Komponenten eingesetzten vulkanisierbaren Kautschukmischungen abstimmt.

Das hierauf aufbauende Herstellen eines Fahrzeugreifens wird dabei vor dem Vulkanisieren regelmäßig die Anordnung des Laufstreifenrohlings auf einer Reifenkarkasse umfassen, wobei gegebenenfalls zwischen diesen Bestandteilen weitere Komponenten vorgesehen werden können, beispielsweise Gürtellagen. Hierbei können herkömmliche Reifenaufbauverfahren zum Einsatz kommen, die dem Fachmann aus dem Stand der Technik bekannt sind. Offenbart wird somit abschließend ein Verfahren zur Herstellung eines Fahrzeugreifens, insbesondere eines Fahrzeugluftreifens, umfassend die Schritte des erfindungsgemäßen Verfahrens zur Herstellung eines Laufstreifens, sowie vor Schritt v3) den Schritt:
v2) Herstellen eines Fahrzeugreifenrohlings umfassend den unvulkanisierten Laufstreifenrohling.

Nachfolgend werden bevorzugte Ausführungsformen der Erfindung unter Bezugnahme auf die beiliegenden Figuren näher erläutert und beschrieben. Dabei zeigen:
- Fig. 1: eine schematische Querschnittsdarstellung eines Laufstreifens gemäß dem Stand der Technik;
- Fig. 2: drei schematische Querschnittsansichten erfindungsgemäßer Laufstreifen in einer ersten, zweiten und dritten Ausführungsform;
- Fig. 3: drei schematische Querschnittsansichten erfindungsgemäßer Laufstreifen in einer vierten, fünften und sechsten Ausführungsform;

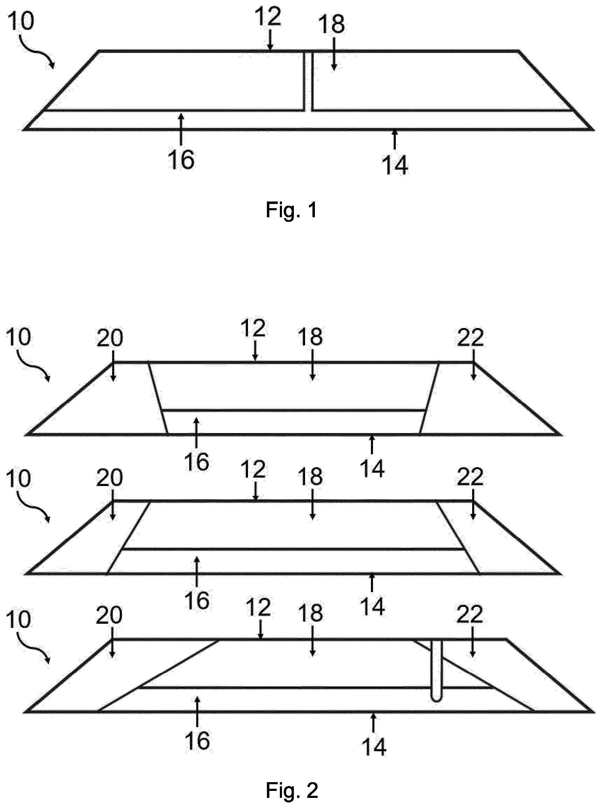

Fig. 1 zeigt eine schematische Querschnittsdarstellung durch einen Laufstreifen 10, welcher aus dem Stand der Technik bekannt ist. Dieser Laufstreifen 10 weist eine für den Fahrbahnkontakt vorgesehene Oberseite 12 und eine für die Verbindung mit weiteren Bauteilen eines Fahrzeugreifens vorgesehene Unterseite 14 auf. Der Laufstreifen 10 besteht vollständig aus einem Zentralelement, wobei sich die Grundlage 16 an der Unterseite 14 und die Decklage 18 an der Oberseite 12 erstrecken. Wie im Stand der Technik regelmäßig üblich, erstreckt sich ein Materialvorsprung, welcher wie die Grundlage 16 aus einem ersten Gummiwerkstoff besteht, durch die Decklage 18 hindurch zur Oberfläche an der Oberseite 12 des Laufstreifens 10 und fungiert damit als CCB.

Fig. 2 zeigt drei schematische Querschnittsdarstellungen von erfindungsgemäßen Laufstreifen 10, in verschiedenen bevorzugten Ausführungsformen. Im Vergleich mit dem Stand der Technik gemäß Fig. 1 umfassen die dargestellten Laufstreifen 10 jeweils zusätzlich zum Zentralelement aus Grundlage 16 und Decklage 18 auch ein erstes Flankenelement 20 und ein zweites Flankenelement 22, welche in den gezeigten Beispielen jeweils gleichartig ausgebildet sind und im Querschnitt, ebenso wie das jeweilige Zentralelement aus der Grundlage 16 und der Decklage 18, eine trapezförmige Grundform aufweisen, wobei die Dimensionierung und die Anordnung der Elemente in den drei gezeigten Ausführungsformen jeweils unterschiedlich sind.

Die in der unteren Abbildung der Fig. 2 angedeutete Ausnehmung, welche sich durch das zweite Flankenelement 22, die Decklage 18 und zumindest teilweise in die Grundlage 16 erstreckt, dient der Visualisierung eines Profils, welches in die Oberseite 12 des Laufstreifens 10 eingearbeitet werden kann und verdeutlicht, dass eine entsprechende Profilierung, welche sich durch mehrere der Elemente erstreckt, bei erfindungsgemäßen Laufstreifen 10 vorteilhafterweise möglich ist, ohne die vorteilhaften Leitfähigkeitseigenschaften zu riskieren.

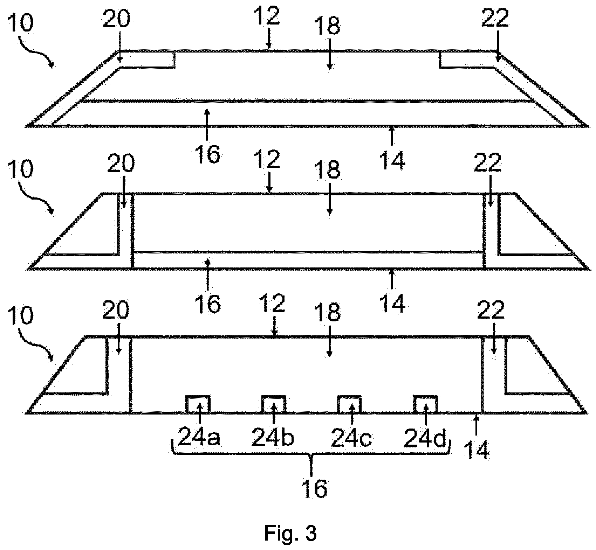

Fig. 3 zeigt drei weitere schematische Querschnittsdarstellungen von erfindungsgemäßen Laufstreifen 10 in bevorzugten Ausführungsformen. Der obere der dargestellten Laufstreifen 10 umfasst ein erstes Flankenelement 20 und ein zweites Flankenelement 22, die jeweils im Querschnitt ein Winkelprofil mit einem Winkel von etwa 140° aufweisen, und die so an den Seiten des Zentralelements angeordnet sind, dass der dritte und vierte Gummiwerkstoff nicht nur an der Unterseite 14, sondern auch an der Oberseite 12 liegen. Hierbei weisen der dritte und vierte Gummiwerkstoff an der Oberseite eine vergleichsweise große Kontaktfläche mit der Fahrbahn auf, wodurch eine elektrostatische Aufladung besonders effizient verhindert werden kann.

In den unteren beiden Darstellungen erfindungsgemäßer Laufstreifen 10 sind das erste Flankenelement 20 und das zweite Flankenelement 22 mit Bezug auf den dritten Gummiwerkstoff und den vierten Gummiwerkstoff ebenfalls als Winkelprofil ausgebildet, jedoch mit einem Winkel von etwa 90°. Im Unterschied zu der oberen Ausführungsform der Fig. 3 verläuft die Kontaktlinie zwischen dem Zentralelement und den Flankenelementen dabei im Wesentlichen vertikal entlang des Randbereichs des Zentralelements. Die Verbindung zum Zentralelement erfolgt über die dem Winkel abgewandten Seiten der Flankenelemente, sodass sich die Winkelprofile vom Zentralelement wegerstrecken. Im Gegensatz zu der oberen Ausführungsform der Fig. 3 ist in den dadurch an den Seiten des Laufstreifens entstehenden Aufnahmen jeweils ein fünfter Gummiwerkstoff angeordnet, durch den die angestrebte Profilgeometrie vervollständigt wird. Hierdurch ist es vorteilhafterweise möglich, den Einfluss des dritten bzw. vierten Gummiwerkstoffs auf die Fahreigenschaften zu minimieren, ohne die günstige Wirkung auf die elektrische Leitfähigkeit der Laufstreifen 10 nachteilig zu beeinflussen. Zudem ist es durch die Wahl des fünften Gummiwerkstoffs darüber hinaus möglich, besonders vorteilhafte Eigenschaften des Laufstreifens 10 quer zur Umfangsrichtung zu realisieren, da die durch den fünften Gummiwerkstoff gebildeten Seitenbereiche bspw. besonders flexibel oder besonders steif ausgeführt werden können.

Die untere Darstellung in der Fig. 3 zeigt insoweit eine besonders bevorzugte Ausführungsform des erfindungsgemäßen Laufstreifens 10, in der die Grundlage 16 nämlich vier separate und äquidistant voneinander beabstandete Teillagen 24a, 24b, 24c, 24d umfasst, die jeweils mit der Decklage 18 verbunden sind und mit einer Oberfläche an der Unterseite 14 des Laufstreifens 10 liegen. Diese Ausführungsform erlaubt vorteilhafterweise eine besonders starke Verringerung des Anteils des ersten Gummiwerkstoffes bzw. der Grundlage 16, sodass es vorteilhafterweise möglich ist, einen Laufstreifen 10 mit besonders günstigen Fahreigenschaften zu erhalten.

In den in Fig. 2 und 3 gezeigten erfindungsgemäßen beispielhaften Ausführungsformen sind der dritte Gummiwerkstoff des ersten Flankenelements 20 und der vierte Gummiwerkstoff des zweiten Flankenelements 22 jeweils identisch ausgeführt und weisen bei 25 °C einen spezifischen Widerstand von 10⁸ Ω m auf. Die Decklage 18 besteht hingegen aus einem zweiten Gummiwerkstoff, welcher bei 25 °C einen spezifischen Widerstand von mehr als 10¹¹ Ω m aufweist.

Sämtliche der eingesetzten Gummiwerkstoffe sind herstellbar durch Vulkanisation von vulkanisierbaren Kautschukmischungen, wobei für die Herstellung des ersten Gummiwerkstoffs, d. h. des Gummiwerkstoffs für die Grundlage, bevorzugt 30 phr oder mehr an Naturkautschuk und zumindest 2 phr an Klebharzen eingesetzt werden, wohingegen in den gezeigten Beispielen die hohe Leitfähigkeit der in den Flankenelementen eingesetzten Gummiwerkstoffe durch den Einsatz von Ruß erreicht wurde.

Sämtliche der gezeigten erfindungsgemäßen Laufstreifen 10 können vorteilhafterweise mittels Coextrusion der entsprechenden vulkanisierbaren Kautschukmischungen mit einem Extruder hergestellt werden, wobei die angrenzenden Elemente und Lagen im Kontaktbereich durch eine stoffschlüssige Verbindung verbunden sind, die im Wesentlichen durch eine Covulkanisation der vulkanisierbaren Kautschukmischungen erzeugt wurde.

### Bezugszeichenliste

- 10: Laufstreifen
- 12: Oberseite
- 14: Unterseite
- 16: Grundlage
- 18: Decklage
- 20: Erstes Flankenelement
- 22: Zweites Flankenelement
- 24a-d: Teillagen

## Patentansprüche

1. Laufstreifen (10) für den Einsatz in Fahrzeugreifen, mit einer für den Fahrbahnkontakt vorgesehenen Oberseite (12) und einer für die Verbindung mit weiteren Bauteilen eines Fahrzeugreifens vorgesehenen Unterseite (14), umfassend:
a) ein Zentralelement umfassend:
i) eine Grundlage (16) umfassend einen ersten Gummiwerkstoff, wobei eine Oberfläche der Grundlage (16) an der Unterseite (14) des Laufstreifens (10) angeordnet ist,
ii) eine mit der Grundlage (16) verbundene Decklage (18) umfassend einen zweiten Gummiwerkstoff, wobei eine Oberfläche der Decklage (18) an der Oberseite (12) des Laufstreifens (10) angeordnet ist, und
b) ein erstes Flankenelement (20) umfassend einen dritten Gummiwerkstoff und ein zweites Flankenelement (22) umfassend einen vierten Gummiwerkstoff,
wobei das erste Flankenelement (20) und das zweite Flankenelement (22) auf gegenüberliegenden Seiten des Zentralelements angeordnet sind, und wobei der dritte Gummiwerkstoff und der vierte Gummiwerkstoff bei 25 °C einen spezifischen Widerstand von 10¹⁰ Ω m oder weniger aufweisen,
**dadurch gekennzeichnet, dass** sich der dritte Gummiwerkstoff und der vierte Gummiwerkstoff an den Seiten des Zentralelements von der Unterseite (14) des Laufstreifens (10) zur Oberseite (12) des Laufstreifens (10) erstrecken, wobei das Zentralelement aus der Grundlage (16) und der Decklage (18) besteht,
wobei der Massenanteil des dritten Gummiwerkstoffs im ersten Flankenelement (20) 90 % oder mehr beträgt, bezogen auf die Masse des ersten Flankenelements (20), und wobei der Massenanteil des vierten Gummiwerkstoffs im zweiten Flankenelement (22) 90 % oder mehr beträgt, bezogen auf die Masse des zweiten Flankenelements (22), oder
wobei das erste Flankenelement (20) und das zweite Flankenelement (22) zumindest einen fünften Gummiwerkstoff umfassen, wobei der fünfte Gummiwerkstoff auf der vom Zentralelement abgewandten Seite des Flankenelements angeordnet ist.

2. Laufstreifen (10) nach Anspruch 1, wobei der dritte Gummiwerkstoff und der vierte Gummiwerkstoff bei 25 °C einen spezifischen Widerstand von 10⁹ Ω m oder weniger, bevorzugt von 10⁸ Ω m oder weniger, besonders bevorzugt von 10⁷ Ω m oder weniger, aufweisen.

3. Laufstreifen (10) nach einem der Ansprüche 1 oder 2, wobei der dritte Gummiwerkstoff und der vierte Gummiwerkstoff identisch sind.

4. Laufstreifen (10) nach einem der Ansprüche 1 bis 3, wobei das erste Flankenelement (20) und/oder das zweite Flankenelement (22), bevorzugt beide Flankenelemente, einen trapezförmigen Querschnitt aufweisen, wobei die längere Grundseite des Trapezes bevorzugt an der Unterseite (14) des Laufstreifens (10) liegt.

5. Laufstreifen (10) nach einem der Ansprüche 1 bis 4, wobei das Zentralelement einen trapezförmigen Querschnitt aufweist, wobei die längere Grundseite des Trapezes bevorzugt auf der Oberseite (12) des Laufstreifens (10) liegt.

6. Laufstreifen (10) nach einem der Ansprüche 1 bis 5, wobei der Massenanteil des dritten Gummiwerkstoffs im ersten Flankenelement (20) 95 % oder mehr, bevorzugt 99 % oder mehr, besonders bevorzugt 99,5 % oder mehr, beträgt, bezogen auf die Masse des ersten Flankenelements (20), und/oder wobei der Massenanteil des vierten Gummiwerkstoffs im zweiten Flankenelement (22) 95 % oder mehr, bevorzugt 99 % oder mehr, besonders bevorzugt 99,5 % oder mehr, beträgt, bezogen auf die Masse des zweiten Flankenelements (22).

7. Laufstreifen (10) nach einem der Ansprüche 1 bis 5, wobei der fünfte Gummiwerkstoff an der Oberseite (12) des Laufstreifens (10) liegt, wobei der fünfte Gummiwerkstoff bevorzugt nicht an der Unterseite (14) des Laufstreifens (10) liegt, wobei der fünfte Gummiwerkstoff und der zweite Gummiwerkstoff besonders bevorzugt identisch sind.

8. Laufstreifen (10) nach einem der Ansprüche 1 bis 7, wobei das erste Flankenelement (20) und/oder das zweite Flankenelement (22) im Querschnitt ein Winkelprofil, bevorzugt mit einem Winkel von 90° oder mehr, aufweisen, sodass der dritte Gummiwerkstoff und/oder der vierte Gummiwerkstoff an den Seiten des Zentralelements und an der Oberseite (12) des Laufstreifens (10) liegen, wobei der Anteil der Oberseite (12) des Laufstreifens (10), der von dem dritten Gummiwerkstoff und/oder dem vierten Gummiwerkstoff gebildet wird, bevorzugt jeweils im Bereich von 5 bis 30 %, bevorzugt im Bereich von 10 bis 20 %, liegt.

9. Laufstreifen (10) nach einem der Ansprüche 1 bis 8, wobei die Grundlage (16) zwei oder mehr, bevorzugt drei oder mehr, besonders bevorzugt vier oder mehr, separate und voneinander beabstandete, bevorzugt äquidistant beabstandete, Teillagen (24a-d) umfasst, wobei sämtliche der Teillagen mit der Decklage (18) verbunden sind, wobei sämtliche der Teillagen mit einer Oberfläche an der Unterseite (14) des Laufstreifens (10) liegen.

10. Fahrzeugreifen, insbesondere Fahrzeugluftreifen, umfassend einen Laufstreifen (10) nach einem der Ansprüche 1 bis 9 als Laufstreifen (10).

## Claims

1. Tread (10) for use in vehicle tyres, having a top side (12) intended for contact with the driving surface and a bottom side (14) intended for connecting to other components of a vehicle tyre, comprising:
a) a central element, comprising:
i) a base ply (16), comprising a first rubber material, wherein a surface of the base ply (16) is arranged on the underside (14) of the tread (10),
ii) a top ply (18), which is connected to the base ply (16), comprising a second rubber material, wherein a surface of the top ply (18) is arranged on the top side (12) of the tread (10), and
b) a first flank element (20), comprising a third rubber material, and a second flank element (22), comprising a fourth rubber material,
wherein the first flank element (20) and the second flank element (22) are arranged on opposite sides of the central element, and wherein the third rubber material and the fourth rubber material have a specific resistance of 10¹⁰ Ω m or less at 25 °C,
**characterized in that** the third rubber material and the fourth rubber material extend on the sides of the central element from the bottom side (14) of the tread (10) to the top side (12) of the tread (10), wherein the central element consists of the base ply (16) and the top ply (18),
wherein the proportion by mass of the third rubber material in the first flank element (20) is 90 % or more, based on the mass of the first flank element (20), and wherein the proportion by mass of the fourth rubber material in the second flank element (22) is 90 % or more, based on the mass of the second flank element (22), or
wherein the first flank element (20) and the second flank element (22) comprise at least a fifth rubber material, wherein the fifth rubber material is arranged on that side of the flank element which faces away from the central element.

2. Tread (10) according to Claim 1, wherein the third rubber material and the fourth rubber material have a specific resistance of 10⁹ Ω m or less, preferably of 10⁸ Ω m or less, particularly preferably of 10⁷ Ω m or less at 25 °C.

3. Tread (10) according to either of Claims 1 or 2, wherein the third rubber material and the fourth rubber material are identical.

4. Tread (10) according to any one of Claims 1 to 3, wherein the first flank element (20) and/or the second flank element (22), preferably both flank elements, have a trapezoidal cross section, wherein the longer base side of the trapezoid is preferably located on the bottom side (14) of the tread (10).

5. Tread (10) according to any one of Claims 1 to 4, wherein the central element has a trapezoidal cross section, wherein the longer base side of the trapezoid is preferably located on the top side (12) of the tread (10).

6. Tread (10) according to any one of Claims 1 to 5, wherein the proportion by mass of the third rubber material in the first flank element (20) is 95 % or more, preferably 99 % or more, particularly preferably 99.5 % or more, based on the mass of the first flank element (20), and/or wherein the proportion by mass of the fourth rubber material in the second flank element (22) is 95 % or more, preferably 99 % or more, particularly preferably 99.5 % or more, based on the mass of the second flank element (22).

7. Tread (10) according to any one of Claims 1 to 5, wherein the fifth rubber material is located on the top side (12) of the tread (10), wherein the fifth rubber material is preferably not located on the bottom side (14) of the tread (10), wherein the fifth rubber material and the second rubber material are particularly preferably identical.

8. Tread (10) according to any one of Claims 1 to 7, wherein the first flank element (20) and/or the second flank element (22) in cross section have an angular profile, preferably with an angle of 90° or more, such that the third rubber material and/or the fourth rubber material are located on the sides of the central element and on the top side (12) of the tread (10), wherein the proportion of the top side (12) of the tread (10) that is formed by the third rubber material and/or the fourth rubber material, is preferably in each case in the range of 5 to 30%, preferably in the range of 10 to 20%.

9. Tread (10) according to any one of Claims 1 to 8, wherein the base ply (16) comprises two or more, preferably three or more, particularly preferably four or more, separate and spaced apart, preferably equidistantly spaced apart, partial plies (24a-d), wherein all of the partial plies are connected to the top ply (18), wherein all of the partial plies are located with a surface on the bottom side (14) of the tread (10).

10. Vehicle tyre, in particular pneumatic vehicle tyre, comprising a tread (10) according to one of Claims 1 to 9 as the tread (10).

## Revendications

1. Bande de roulement (10) destinée à être utilisée dans des pneus de véhicules, avec un côté supérieur (12) prévu pour le contact avec la chaussée et un côté inférieur (14) prévu pour la liaison avec d'autres composants d'un pneu de véhicule, comprenant :
a) un élément central comprenant :
i) une couche de base (16) comprenant un premier matériau de caoutchouc, une surface de la couche de base (16) étant agencée sur le côté inférieur (14) de la bande de roulement (10),
ii) une couche de couverture (18) reliée à la couche de base (16), comprenant un deuxième matériau de caoutchouc, une surface de la couche de couverture (18) étant agencée sur le côté supérieur (12) de la bande de roulement (10), et
b) un premier élément de flanc (20) comprenant un troisième matériau de caoutchouc et un deuxième élément de flanc (22) comprenant un quatrième matériau de caoutchouc,
le premier élément de flanc (20) et le deuxième élément de flanc (22) étant agencés sur des côtés opposés de l'élément central, et le troisième matériau de caoutchouc et le quatrième matériau de caoutchouc présentant une résistivité de 10¹⁰ Ω m ou moins à 25 °C,
**caractérisé en ce que** le troisième matériau de caoutchouc et le quatrième matériau de caoutchouc s'étendent sur les côtés de l'élément central depuis le côté inférieur (14) de la bande de roulement (10) jusqu'au côté supérieur (12) de la bande de roulement (10), l'élément central étant constitué de la couche de base (16) et de la couche de couverture (18),
la proportion en masse du troisième matériau de caoutchouc dans le premier élément de flanc (20) étant de 90 % ou plus par rapport à la masse du premier élément de flanc (20), et la proportion en masse du quatrième matériau de caoutchouc dans le deuxième élément de flanc (22) étant de 90 % ou plus par rapport à la masse du deuxième élément de flanc (22), ou
le premier élément de flanc (20) et le deuxième élément de flanc (22) comprenant au moins un cinquième matériau de caoutchouc, le cinquième matériau de caoutchouc étant agencé sur le côté de l'élément de flanc détourné de l'élément central.

2. Bande de roulement (10) selon la revendication 1, le troisième matériau de caoutchouc et le quatrième matériau de caoutchouc présentant une résistivité à 25 °C de 10⁹ Ω m ou moins, de préférence de 10⁸ Ω m ou moins, de manière particulièrement préférée de 10⁷ Ω m ou moins.

3. Bande de roulement (10) selon l'une quelconque des revendications 1 ou 2, le troisième matériau de caoutchouc et le quatrième matériau de caoutchouc étant identiques.

4. Bande de roulement (10) selon l'une quelconque des revendications 1 à 3, le premier élément de flanc (20) et/ou le deuxième élément de flanc (22), de préférence les deux éléments de flanc, présentant une section transversale trapézoïdale, le côté de base le plus long du trapèze étant de préférence situé sur le côté inférieur (14) de la bande de roulement (10).

5. Bande de roulement (10) selon l'une quelconque des revendications 1 à 4, l'élément central présentant une section transversale trapézoïdale, le côté de base le plus long du trapèze étant de préférence situé sur le côté supérieur (12) de la bande de roulement (10).

6. Bande de roulement (10) selon l'une quelconque des revendications 1 à 5, la proportion en masse du troisième matériau de caoutchouc dans le premier élément de flanc (20) étant de 95 % ou plus, de préférence de 99 % ou plus, de manière particulièrement préférée de 99,5 % ou plus, par rapport à la masse du premier élément de flanc (20), et/ou la proportion en masse du quatrième matériau de caoutchouc dans le deuxième élément de flanc (22) étant de 95 % ou plus, de préférence de 99 % ou plus, de manière particulièrement préférée de 99,5 % ou plus, par rapport à la masse du deuxième élément de flanc (22).

7. Bande de roulement (10) selon l'une quelconque des revendications 1 à 5, le cinquième matériau de caoutchouc étant situé sur le côté supérieur (12) de la bande de roulement (10), le cinquième matériau de caoutchouc n'étant de préférence pas situé sur le côté inférieur (14) de la bande de roulement (10), le cinquième matériau de caoutchouc et le deuxième matériau de caoutchouc étant de manière particulièrement préférée identiques.

8. Bande de roulement (10) selon l'une quelconque des revendications 1 à 7, le premier élément de flanc (20) et/ou le deuxième élément de flanc (22) présentant en section transversale un profil angulaire, de préférence avec un angle de 90° ou plus, de telle sorte que le troisième matériau de caoutchouc et/ou le quatrième matériau de caoutchouc sont situés sur les côtés de l'élément central et sur le côté supérieur (12) de la bande de roulement (10), la proportion du côté supérieur (12) de la bande de roulement (10) formé par le troisième matériau en caoutchouc et/ou le quatrième matériau en caoutchouc étant de préférence dans la plage allant de 5 à 30 %, de préférence dans la plage allant de 10 à 20 %, respectivement.

9. Bande de roulement (10) selon l'une quelconque des revendications 1 à 8, la couche de base (16) comprenant deux ou plus, de préférence trois ou plus, de manière particulièrement préférée quatre ou plus, couches partielles (24a-d) séparées et espacées les unes des autres, de préférence espacées de manière équidistante, toutes les couches partielles étant reliées à la couche de couverture (18), toutes les couches partielles étant situées avec une surface sur le côté inférieur (14) de la bande de roulement (10).

10. Pneu de véhicule, notamment pneumatique de véhicule, comprenant une bande de roulement (10) selon l'une quelconque des revendications 1 à 9 en tant que bande de roulement (10).
